# EUROPÄISCHE PATENTSCHRIFT

(11) **EP 3 235 379 B1**
(45) Veröffentlichungstag und Bekanntmachung des Hinweises auf die Patenterteilung: **25.08.2021**
(21) Anmeldenummer: 17401027.2
(22) Anmeldetag: 31.03.2017
(51) Int. Cl.: A01M 7/00

(54) **SYSTEM UND VERFAHREN ZUR ERFASSUNG DER RÄUMLICHEN VERTEILUNG DES SPRÜHFÄCHERS EINER LANDWIRTSCHAFTLICHEN ARBEITSMASCHINE**
SYSTEM AND METHOD FOR DETECTING THE SPATIAL DISTRIBUTION OF THE SPRAY PATTERN OF AN AGRICULTURAL WORKING MACHINE
SYSTÈME ET PROCÉDÉ DE DÉTECTION D'UNE RÉPARTITION SPATIALE D'UN SCHÉMA DE PULVÉRISATION D'UNE MACHINE DE TRAVAIL AGRICOLE

(30) Priorität: 14.04.2016 DE 102016106897
(43) Veröffentlichungstag der Anmeldung: 25.10.2017
(73) Patentinhaber: Amazonen-Werke H. Dreyer SE & Co. KG, 49205 Hasbergen (DE)
(72) Erfinder: Klemann, Timo, 49191 Belm (DE); Wild, Karl, 01454 Ullersdorf (DE)

(56) Entgegenhaltungen:
- EP-A1- 3 216 334
- WO-A1-2004/089077
- WO-A1-2013/063225
- DE-B3-102013 019 098
- US-A1- 2007 076 202
- US-A1- 2009 099 737

## Beschreibung

Die Erfindung betrifft ein System und ein Verfahren zur Erfassung der räumlichen Verteilung des Sprühfächers einer landwirtschaftlichen Arbeitsmaschine gemäß des Oberbegriffes des Patentanspruches 1.

Ein derartiges System und ein derartiges Verfahren sind in der US 2007/0076202A1 beschrieben. Zur Echtzeiterfassung der räumlichen Ausdehnung des Sprühfächers einer landwirtschaftlichen Arbeitsmaschine wird ein optisches Messsystem eingesetzt. Dazu ist eine geeignete Erfassungsvorrichtung zentral auf dem Fahrzeug angeordnet, welche eine Lichtquelle sowie einen Sensor umfasst und welche in einer horizontalen Ebene geeignet alternierend verschwenkt wird, um den gesamten Sprühfächer zu erfassen. Diese Vorrichtung sendet Licht in den durch die Arbeitsmaschine ausgebrachten Sprühnebel. Im Sprühnebel wird dieses Licht gestreut und der rückgestreute Anteil wird von einem Sensor erfasst. Die Auswertung des rückgestreuten Lichtes erlaubt den Rückschluss auf die räumliche Verteilung des Sprühnebels und des Sprühfächers. Die ermittelte Ist-Verteilung wird an eine Auswerteeinheit weitergeleitet, welche auf Basis dieser Ist-Verteilung zum Erreichen einer Soll-Verteilung notwendige Anpassungen der Betriebsparameter ermittelt. Diese Anpassungen werden von einem Bediener oder automatisiert von der Arbeitsmaschine umgesetzt. Heute sind bei landwirtschaftlichen Arbeitsmaschinen, wie Feldspritzen, Arbeitsbreiten bis 40 Meter üblich. Bei einer beschriebenen zentralen Erfassungsvorrichtung ist für eine vollständige Echtzeiterfassung des gesamten Sprühfächers einer solchen Arbeitsmaschine eine hohe Schwenkgeschwindigkeit der beschriebenen Erfassungsvorrichtung notwendig, damit die Zeitintervalle zwischen den Erfassungszeiten der Außenbereiche nicht für eine wirkungsvolle Echtzeitkontrolle zu groß werden. Diese hohen Geschwindigkeiten samt häufigen Richtungswechseln und Beschleunigungsvorgängen müssen über viele Arbeitsstunden aufrechterhalten werden, was die mechanischen Elemente beträchtlich beansprucht und daher eine erhöhte Ausfallgefahr bedeutet. Zusätzlich sind Auflösungsvermögen und Empfindlichkeit eines optischen Sensors begrenzt. Die Intensität des von den Außenbereichen des Sprühfächers rückgestreuten, zu erfassenden Lichtes ist gegenüber der von den inneren Bereichen rückgestreuten Intensität gering, so dass das Kontrastverhältnis für eine Erfassung der Außenbereiche ungünstig ausfällt. Da aber beispielsweise an das zu bearbeitende Feld angrenzende Bereiche, wie Nachbarfelder oder Gewässer, auch unter ungünstigen und/oder wechselnden Umgebungsbedingungen, beispielsweise durch Windeinfluss, nicht besprüht werden dürfen, ist eine zuverlässige Kontrolle der Randbereiche des Sprühfächers und insbesondere eine Kontrolle abdriftenden Materials besonders wichtig.

Der Erfindung liegt daher die Aufgabe zugrunde, ein System und ein Verfahren zu schaffen, welches eine zuverlässige Erfassung der räumlichen Verteilung des Sprühfächers einer landwirtschaftlichen Arbeitsmaschine auch bei wechselnden Umwelteinflüssen gewährleistet.

Diese Aufgabe wird erfindungsgemäß durch die kennzeichnenden Merkmale des Anspruchs 1 gelöst. Eine Positionierung zumindest annähernd auf der Höhe des Verteilergestänges meint eine Positionierung in der Nähe des Verteilergestänges bezüglich der Fahrtrichtungsachse. Die Positionierung erfolgt etwa in einer zum Untergrund parallelen Ebene, in der auch das Verteilergestänge liegt, wobei ein geringes Vor- sowie Nacheilen bezüglich des Verteilergestänges gemäß den nachfolgenden Ausführungen eingeschlossen sein sollen. Durch die bezüglich der äußeren Spritzdüse versetzte Positionierung des zumindest einen Sensors besteht ein geeigneter Abstand zwischen dem zumindest einen Sensor und dem Sprühfächer, sodass der Sensor zumindest große Teile des Sprühfächers erfassen kann und zuverlässige Daten über die Ausbreitung der ausgebrachten Tröpfchen ermitteln kann.

Eine vorteilhafte Ausgestaltung wird erreicht, indem der zumindest eine Sensor seitlich nach außen versetzt positioniert ist. Durch die bezüglich des Verteilergestänges nach außen versetzte Positionierung des zumindest einen Sensors befindet sich der zumindest eine Sensor unmittelbar im Außenbereich des Sprühfächers, sodass dieser besonders relevante Bereich mit hoher Zuverlässigkeit direkt aus nächster Nähe erfasst werden kann.

Bei extremen Umweltverhältnissen, beispielsweise starten Winden, ist es vorteilhaft, wenn zumindest eine Sensor seitlich nach innen versetzt positioniert ist. Dadurch können auch beispielsweise windbedingt stark verformte und/oder nach innen verschobene Sprühfächer erfasst werden.

Erfindungsgemäß vorgesehen ist die Anordnung zumindest einer Einrichtung zur Erfassung von Richtung(en) und Stärke der Luftbewegung(en) an dem Verteilergestänge der landwirtschaftlichen Arbeitsmaschine. Luftbewegungen werden beispielsweise durch Wind oder Thermik hervorgerufen. Durch die Erfassung von Richtung(en) und Stärke der Luftbewegung(en) wird erreicht, dass der zumindest eine Sensor mithilfe der Tragevorrichtung entsprechend den und/oder angepasst an ermittelte(n) Werte(n) von Richtung(en) und Stärke der Luftbewegung(en) sowie Fahrgeschwindigkeit der landwirtschaftlichen Arbeitsmaschine einstellund/oder positionierbar ist. Eine derartig angepasste Positionierung erhöht die Genauigkeit und Zuverlässigkeit der Sprühfächerfassung vor allem in den besonders relevanten Außenbereichen erheblich.

An Verteilergestängen landwirtschaftlicher Arbeitsmaschinen sind beabstandet zueinander mehrere Spritzdüsen angeordnet. Um eine optimale, umfassende Erfassung des Sprühfächers dieser Spritzdüsen insbesondere in den relevanten Außenbereichen des Verteilergestänges zu gewährleisten, ist es vorteilhaft, dass der zumindest eine Sensor zumindest um den Abstand zwischen den einzelnen Spritzdüsen nach außen versetzt zur äußeren Spritzdüse angeordnet ist.

Die Erfassung der räumlichen Verteilung des Sprühfächers dient einerseits der Sicherstellung des Ausbringens in optimaler Menge und Verteilung über der zu bearbeitenden landwirtschaftlichen Nutzfläche, andererseits der Einhaltung gesetzlicher Auflagen. Beispielsweise ist es verboten, benachbarte Fremdflächen zu besprühen oder Gewässer zu kontaminieren. Zu diesem Zweck ist in den Außenbereichen des Verteilergestänges nicht nur die Verteilqualität zu überprüfen. Es ist von Vorteil, dass zusätzlich und/oder alternativ durch den zumindest einen Sensor zumindest die Abdrift des Sprühfächers erfasst wird. Durch eine Erfassung der Abdrift kann in einfacher Weise geprüft werden, ob ausgebrachtes Material eine zuvor manuell und/oder unter Zuhilfenahme aufgezeichneter Positions- und/oder Kartendaten definierte Grenze überschreitet.

Die Erfassung des Sprühfächers kann durch verschiedene Prinzipien erfolgen. Es zeigt sich als besonders vorteilhaft, wenn der wenigstens eine Sensor geeignet ist, die räumliche Verteilung des zu erfassenden Sprühfächers kontaktfrei, vorzugsweise mittels optischer Sensoren oder Radarsensoren zu erfassen. Gegenüber beispielsweise der Erfassung mittels Benetzungssensors ergibt sich dadurch der Vorteil, dass der zumindest eine Sensoren oder seine Tragevorrichtung nicht mit dem auszubringenden Material in Kontakt kommen. Das ausgebrachte Material ist oft ein gesundheitsschädliches, chemisches Gemisch, welches den zumindest einen Sensor und dessen Elektronik beschädigen kann. Ebenso kann so vermieden werden, dass bei Wartungsarbeiten am benetzten Sensor ein Bediener mit Resten des gesundheitsschädlichen Materials in Kontakt kommt.

Eine weitere vorteilhafte Ausführungsform ergibt sich dadurch, dass die Erfassung der räumlichen Verteilung des Sprühfächers durch den wenigstens einen Sensor hygroskopisch durch Messen der Luftfeuchtigkeit und deren Vergleich mit einem an geeigneter Stelle gemessenen Referenzwert erfolgt. Die durch den Verteilvorgang in der Luft befindlichen feinen Flüssigkeitströpfchen erhöhen die Luftfeuchtigkeit in unmittelbarer Umgebung des Sprühfächers beträchtlich, sodass die Abmessungen des Sprühfächers aus den Messungen abgeleitet werden können. Um den wenigstens einen Sensor geeignet zu positionieren, ist es vorteilhaft, dass der wenigstes eine Sensor mittels einer als gestängeartige Halterung ausgebildeten Tragevorrichtung am äußeren Ende es Verteilergestänges der Arbeitsmaschine angeordnet ist. Diese Ausführungsform ist eine kostengünstige Möglichkeit, den wenigstens einen Sensor zu positionieren und ermöglicht beispielsweise durch Automatisierung eine Anpassung der Position an die tatsächlich ermittelten Windverhältnisse. Zusätzlich kann der wenigstens eine Sensor beim Klappvorgang des Verteilergestänges ohne weiteren Arbeitsschritt geeignet positioniert werden und ist somit unverzüglich einsatzbereit.

Außerhalb seines Einsatzes sollte der wenigstens eine Sensor platzsparend und vor Beschädigung geschützt aufbewahrt werden. Es daher von Vorteil, wenn der wenigstens eine Sensor eine Arbeits- und eine Transportposition aufweist und zwischen Arbeits- und Transportposition verbringbar ist.

Verteilergestänge landwirtschaftlicher Arbeitsmaschinen weisen Arbeitsbreiten von bis zu 40 Metern auf. Insbesondere auf landwirtschaftlichen Nutzflächen mit Hindernissen besteht daher eine hohe Kollisionsgefahr von Teilen des Verteilergestänges mit diesen Hindernissen. Schon bei Wendemanövern mit niedrigen Fahrgeschwindigkeiten weisen die Ausleger des Verteilergestänges aufgrund dessen Breite große Kurvengeschwindigkeiten auf, welche im Kollisionsfall zu empfindlichen Beschädigungen führen können. Um diese Gefahr deutlich zu reduzieren, ist es vorteilhaft, dass das Verteilergestänge aus mehreren klappbaren Segmenten besteht und die Arbeitsmaschine geeignete Sensoren zur Feststellung von Annäherungen des Verteilergestänges, Segmenten des Verteilergestänges und/oder der gestängeartigen Halterung des wenigstens einen Sensors an Hindernisse aufweist, wobei bei Feststellung einer solchen Annäherung zumindest die den zumindest einen Sensor tragende als gestängeartige Halterung ausgebildete Tragvorrichtung über einen Aktuator automatisch in geeigneter Weise weggebracht wird und/oder sie sich bei kollisionsbedingter Überlast in geeigneter Weise reversibel wegbewegt und vorzugsweise selbststätig und/oder über einen Aktuator in die Arbeitsposition zurückbewegt wird.

Um die räumliche Verteilung des Sprühfächers zuverlässig zu erfassen und auch bei wechselnden Umwelteinflüssen, insbesondere Windverhältnissen, zumindest die Abdrift zuverlässig zu ermitteln, ist es von Vorteil, dass zumindest ein Sensor zur Erfassung der räumlichen Verteilung des Sprühfächers zumindest an den gegenüberliegenden äußeren Enden des Verteilergestänges der landwirtschaftlichen Arbeitsmaschine angeordnet ist. Dadurch kann der Verteilvorgang auch bei sich plötzlich und/oder wiederholt ändernder Richtung der Luftbewegung ohne Minderung der Arbeitsqualität fortgesetzt werden.

Eine weitere vorteilhafte Ausführung wird dadurch erreicht, dass die Tragevorrichtung des wenigstens einen Sensors ein vorzugsweise im Wesentlichen senkrecht start- und landefähiges, vorzugsweise autonom agierendes, unbemanntes Luftfahrzeug (ULF) ausgebildet ist, welches den wenigstens einen zur Erfassung des Sprühfächers geeigneten Sensor aufweist, welches eine Einheit zum Senden und/oder Empfangen von Steuersignalen von einer und/oder an eine Basisstation und/oder landwirtschaftliche Arbeitsmaschine und zumindest eine Einheit zur Übermittlung der erfassten Daten an eine Basisstation und/oder an eine landwirtschaftliche Arbeitsmaschine aufweist, eine wieder auffüllbare und/oder austauschbare Energiespeichereinheit aufweist und welches eine Einheit zur Positionsbestimmung aufweist.

Die Positionsbestimmung erfolgt beispielsweise über ein satellitengestütztes Ortungssystem, ein Koppelortungssystem, anhand bildanalytischer Methoden relativ zur Umgebung oder mittels externer Ortungssysteme.

Durch DE 10 2013 019 098 B3 sind unbemannte Luftfahrzeuge (ULF) bekannt. Derartige unbemannte Luftfahrzeuge sind vorzugsweise senkrecht start- und landefähig, sodass ihre Start- und Landevorrichtung auch an einem Bodenfahrzeug angeordnet werden kann. Dieses Bodenfahrzeug kann beispielsweise eine landwirtschaftliche Arbeitskombination, insbesondere bestehend aus Zugmaschine und Arbeitsmaschine, sein. Die unbemannten Luftfahrzeuge weisen eine nachfüllbare oder austauschbare Energiespeichereinheit und eine Funktionseinheit zur Erfassung von Parametern der Umwelt und Umgebung auf. Diese erfassten Parameter von Umwelt und Umgebung sind drahtlos an eine Steuerungseinrichtung der Start- bzw. Landevorrichtung und/oder des Bodenfahrzeugs übertragbar. Mithilfe einer Steuereinheit der Start- bzw. Landevorrichtung bzw. des Bodenfahrzeugs ist die autonome Bewegung des unbemannten Luftfahrzeugs steuerbar.

Die Steuerung des unbemannten Luftfahrzeugs kann autonom erfolgen und/oder alternativ durch einen Bediener, welcher ein externer Bediener sein kann oder der Führer der landwirtschaftlichen Arbeitsmaschine. Die Steuerung durch einen Bediener erfolgt ferngesteuert mittels einer mobilen Steuereinrichtung oder ausgehend von einer Steuerzentrale. Diese Steuereinrichtung oder -zentrale kann auf der landwirtschaftlichen Arbeitsmaschine, vorzugsweise in der Kabine der Zugmaschine angeordnet sein.

Vorteilhaft ist die Verwendung von senkrecht start- und landefähigen unbemannten Luftfahrzeugen, da sie keine Start- und Landebahnen oder Abschussvorrichtungen benötigen und somit nur geringe Anforderungen an eine Start- und Landevorrichtung stellen. Durch den Verzicht auf Tragflächen sind sie kompakt gebaut, sodass eine Start- und Landeplattform mobil am Feldrand aufgebaut oder auf der landwirtschaftlichen Arbeitsmaschine oder deren Zugmaschine angeordnet sein kann.

Die Verwendung von Multicoptern erlaubt das Fliegen bei niedrigen Geschwindigkeiten, die auf die Arbeitsgeschwindigkeit der Arbeitsmaschine abgestimmt werden können. Die Bewegung des unbemannten Luftfahrzeugs kann entweder autonom, computergesteuert oder ferngesteuert durch den Fahrzeugführer der Zugmaschine oder einen weiteren Bediener erfolgen. Dabei wird ein autonomes Agieren bevorzugt, weil es den notwendigen Arbeitsaufwand reduziert.

Der Einsatz unbemannter Luftfahrzeuge für verschiedene landwirtschaftliche Zwecke ist bekannt. Beispielsweise werden sie zur topographischen Aufklärung oder spektroskopischen Untersuchung von beispielsweise Pflanzenbeständen genutzt. Ihr Einsatz in erfindungsgemäßer Weise stellt eine flexible Tragevorrichtung für den zumindest einen Sensor dar. Der zumindest eine Sensor kann auf Basis ermittelten Werte für Richtung(en) und Stärke der Luftbewegungen(en) mithilfe eines unbemannten Luftfahrzeugs schnell an einer geeigneten Stelle positioniert werden, um den Sprühfächer und/oder die Abdrift zumindest in den relevanten Außenbereichen des Verteilergestänges zu erfassen.

Insbesondere, um die Abdrift zu erfassen, ist es vorteilhaft, dass das unbemannte Luftfahrzeug vorzugsweise auf der Lee-Seite der landwirtschaftlichen Arbeitsmaschine eingesetzt wird. Auf diese Weise ist eine schnelle und zuverlässige Erfassung der Abdrift möglich, da auf dieser Seite bei wehendem Wind die Gefahr besteht, dass ausgebrachtes Material über zuvor die definierte Grenze tritt.

Bei der Erfassung der Ist-Verteilung des Verteilvorgangs einer landwirtschaftlichen Arbeitsmaschine und für deren Anpassung bei Abweichungen von einer vorgegebenen Soll-Verteilung ist es neben der Erfassung des Sprühfächers während des Verteilvorgangs von Vorteil, dass vorzugsweise zusätzlich zur räumlichen Verteilung des Sprühfächers mittels geeigneter Sensoren Umgebungsdaten, vorzugsweise Luftfeuchtigkeit, Richtung(en) und Stärke der Luftbewegung(en), ermittelt werden. Durch die zusätzlich verfügbaren Daten kann Abweichungen der Ist- von der Soll-Verteilung wirkungsvoll entgegengewirkt werden. So sind durch die Kombination der Messdaten beispielsweise bei einer windbedingten Verformung des Sprühfächers nicht nur die Ist-Verteilung, sondern mit Richtung(en) und Stärke der Luftbewegung(en) auch deren Ursachen bekannt.

Um bei einer Erfassung der räumlichen Verteilung des Sprühfächers und/oder zumindest der Abdrift nach der Feststellung von Differenzen zwischen Ist- und Soll-Verteilung die Betriebsparameter der Arbeitsmaschine in geeigneter Weise anzupassen, muss das System und/oder die landwirtschaftliche Arbeitsmaschine eine Steuereinheit aufweisen, in deren Speichereinheit Einstellwerte für die Betriebsparameter der Arbeitsmaschine hinterlegt sind, welche einer einstellbaren Soll-Verteilung zugeordnet sind. Es ist vorteilhaft, dass die mittels des zumindest einen Sensors ermittelte räumliche Ist-Verteilung des Sprühfächers mit der eingestellten Soll-Verteilung abgeglichen wird, wobei die Steuereinheit auf Basis festgestellter Differenzen zwischen Ist- und Soll-Verteilung durch Anpassung der Betriebsparameter der Arbeitsmaschine regelnd in den Verteilvorgang eingreift und die Ist-Verteilung an die eingestellte Soll-Verteilung anpasst.

In vorteilhafter Weise lässt sich das beschriebene System für ein Verfahren verwenden, bei welchem mithilfe des zumindest einen Sensors, welcher mittels einer Tragevorrichtung in Abhängigkeit von mittels geeigneter Erfassungseinrichtungen erfassten Messwerten für Richtung(en) und Stärke der Luftbewegung(en), sowie Fahrgeschwindigkeit der landwirtschaftlichen Arbeitsmaschine im äußeren Bereich des Verteilergestänges geeignet positioniert wird, die räumliche Verteilung des zu erfassenden Sprühfächers und/oder die Abdrift des Sprühfächers erfasst wird, wobei durch eine Auswerteeinheit die durch den zumindest einen Sensor ermittelte räumliche Ist-Verteilung und/oder die Abdrift mit in einer Speichereinheit einstellbaren und/oder hinterlegten Soll- und/oder Grenzwerten abgeglichen werden und auf Basis festgestellter Differenzen zwischen Ist- und Soll-Verteilung eine Steuereinheit durch Anpassung der Betriebsparameter der Arbeitsmaschine regelnd in den Verteilvorgang eingreift.

Mit dem beschriebenen System und dem beschriebenen Verfahren ist die kontinuierliche Echtzeiterfassung der räumlichen Verteilung des Sprühfächers einer landwirtschaftlichen Arbeitsmaschine durchführbar. Dadurch wird eine optimale Ausbringqualität entsprechend einer zuvor eingestellten Soll-Verteilung ebenso gewährleistet, wie eine Kontrolle der Abdrift, sodass ein Übertreten von ausgebrachtem Material über zuvor definierte Grenzen zuverlässig verhindert wird.

Weitere Einzelheiten der Erfindung sind der Beispielsbeschreibung und den Zeichnungen zu entnehmen. Die Zeichnungen zeigen
- Fig.1: die Bearbeitung einer landwirtschaftlichen Nutzfläche mit einer landwirtschaftlichen Arbeitsmaschine mit erfindungsgemäß mittels stangenförmig ausgebildeter Tragevorrichtung positionierten Sensoren zur Erfassung des Sprühfächers in perspektivischer Ansicht von schräg hinten oben,
- Fig.2: den äußeren Teil des Verteilergestänges einer landwirtschaftlichen Arbeitsmaschine mit Sprühfächer ohne Umwelteinflüsse, insbesondere Windeinflüsse, in Prinzipdarstellung von hinten,
- Fig.3: den äußeren Teil des Verteilergestänges einer landwirtschaftlichen Arbeitsmaschine mit Sprühfächer und bei Windeinfluss in Prinzipdarstellung von hinten,
- Fig.4: den äußeren Teil des Verteilergestänges einer landwirtschaftlichen Arbeitsmaschine mit Sprühfächer und bei Windeinfluss und mit einem erfindungsgemäß angeordneten, mittels stangenartiger Halterung getragenen Sensor in Prinzipdarstellung von hinten und
- Fig.5: den äußeren Teil des Verteilergestänges einer landwirtschaftlichen Arbeitsmaschine mit Sprühfächer und bei Windeinfluss und mit einem erfindungsgemäß angeordneten, mittels unbemanntem Luftfahrzeug getragenen Sensor in Prinzipdarstellung von hinten.

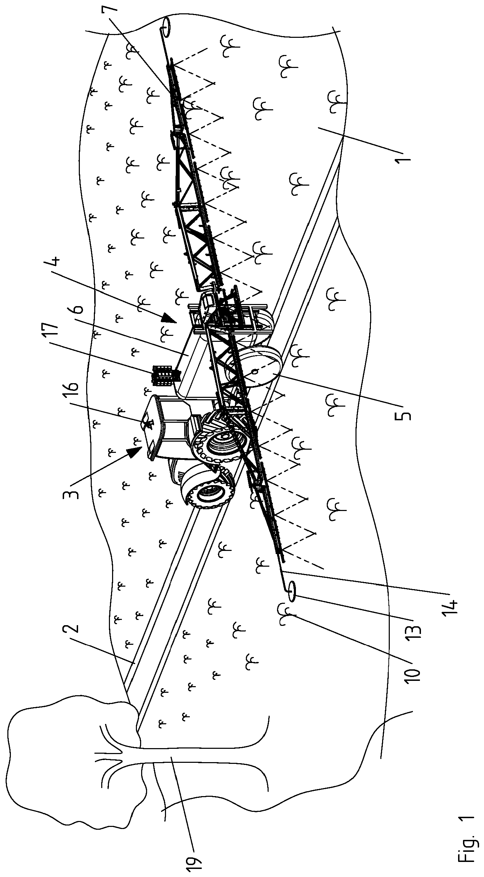

Auf einer in Fig. 1 nur teilweise dargestellten landwirtschaftlichen Nutzfläche 1 sind beispielsweise von einem elektronisch basierten Managementsystem in bekannter und daher nicht näher erläuterter Weise Fahrspuren 2 für weitere Bearbeitungsschritte der Nutzfläche 1 angelegt worden. In diesen Fahrspuren 2 bewegt sich eine landwirtschaftliche Arbeitskombination, bestehend aus einer Zugmaschine 3 und einer Arbeitsmaschine 4. Die Arbeitsmaschine 4 ist in dem gewählten Beispiel als gezogene Feldspritze ausgebildet, wie in der Fig. 1 gezeigt ist.

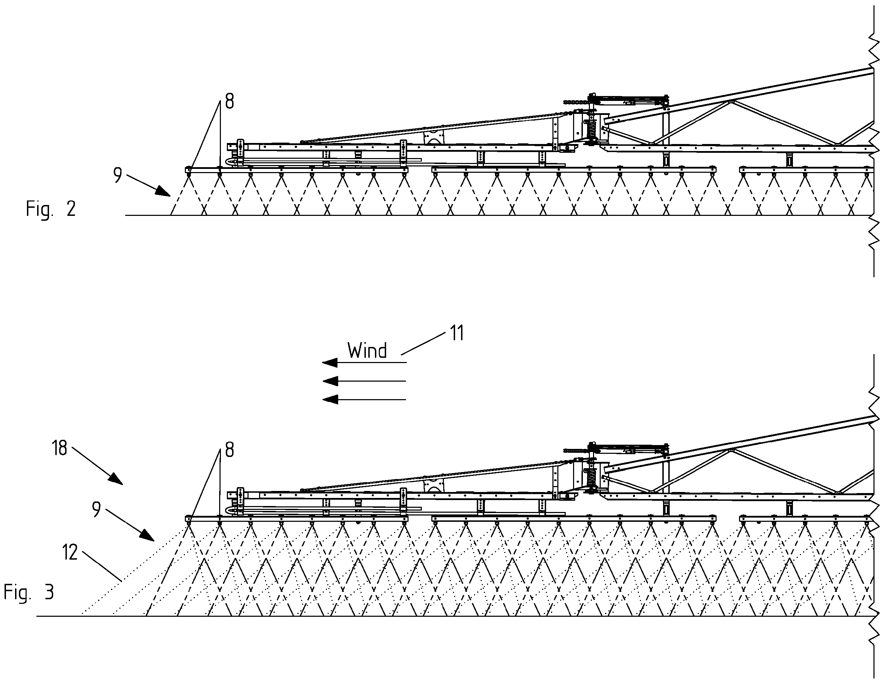

Die Arbeitsmaschine 4 ist mittels an ihrem auf einem Fahrwerk 5 abgestützten Rahmen angeordneter Zugdeichsel an einer Anhängevorrichtung der Zugmaschine 3 angehängt. Die Arbeitsmaschine 4 weist zur Bevorratung des zu verteilenden flüssigen und/oder verflüssigten Pflanzenschutz- und/oder Düngemittels, welches mittels einer Trägerflüssigkeit verdünnt ist, einen Vorratsbehälter 6 auf, welcher auf dem Rahmen abgestützt ist. Das flüssige und/oder verflüssigte Pflanzenschutz- und/oder Düngemittel wird über ein an der Arbeitsmaschine 4 angeordnetes Verteilergestänge 7 verteilt, wobei das flüssige und/oder verflüssigte Pflanzenschutz- und/oder Düngemittelmittel während des Verteilvorgangs druckbeaufschlagt durch wenigstens eine am Verteilergestänge 7 angebrachte Spritzdüse 8 unter Tröpfchenbildung in Form eines Sprühfächers 9 auf die landwirtschaftliche Nutzfläche 1 und/oder auf die auf der landwirtschaftlichen Nutzfläche 1 wachsenden Pflanzen 10 ausgebracht wird, wie es in Fig. 1 und Fig. 2 gezeigt ist. Im gewählten Ausführungsbeispiel der Fig. 1 bis 5 sind am Verteilergestänge 7 beabstandet zueinander mehrere Spritzdüsen 8 über die gesamte Breite des Verteilergestänges 7 angeordnet.

Der Sprühfächer 9 weist eine dreidimensionale Form auf, welche durch Umwelteinflüsse, insbesondere durch Luftbewegungen 11, welche im Ausführungsbeispiel als Wind dargestellt sind, beeinflusst wird, wie Fig. 3 zeigt. Der Wind 11 deformiert den Sprühfächer 9 und transportiert insbesondere feine Tröpfchen aufgrund ihres Aspektverhältnisses besonders effektiv, wodurch eine Abdrift 12 erzeugt wird. Diese Abdrift 12 ist geeignet, beispielsweise benachbarte Fremdflächen oder nahe Gewässer verbotenerweise zu kontaminieren und muss daher erfasst und kontrolliert werden.

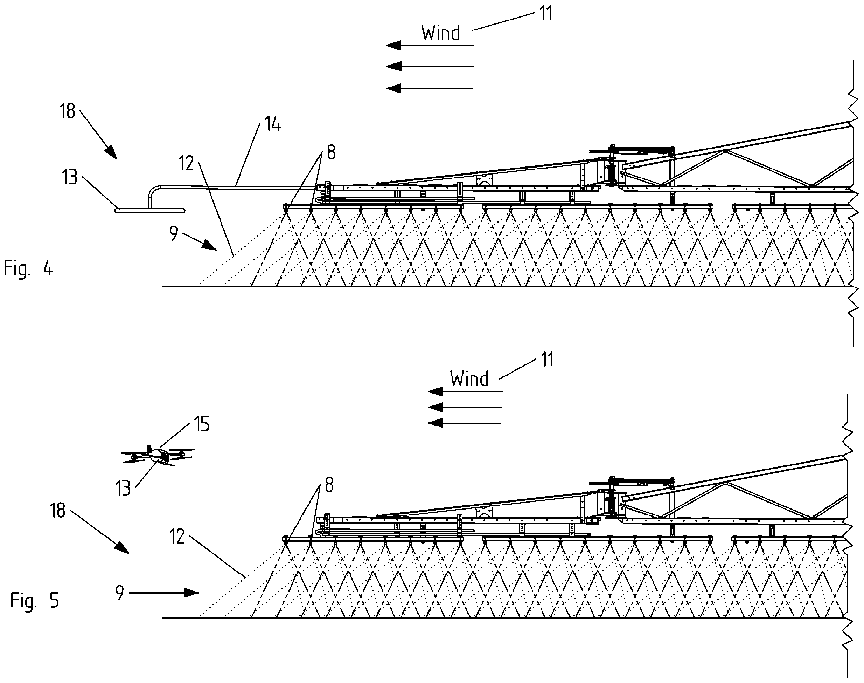

Damit auf Umwelteinflüsse, insbesondere Wind 11, und damit einhergehende Streufächerdeformation und/oder zumindest sich ändernde Abdrift 12 reagiert werden kann, ist eine Erfassung der räumlichen Verteilung des Sprühfächers 9 und/oder der Abdrift 12 notwendig. Diese Erfassung wird durch zumindest einen Sensor 13 erreicht, welcher erfindungsgemäß an geeigneter Position im Außenbereich des Verteilergestänges 7 positioniert ist. Vorzugsweise ist der zumindest eine Sensor 13 zumindest um den zumindest halben Abstand zwischen den einzelnen Spritzdüsen 8 nach außen versetzt zur äußeren Spritzdüse 8 angeordnet. Dazu wird der Sensor 13 von einer Tragevorrichtung getragen, welche in Fig. 4 als am äußeren Ende des Verteilergestänges 7 angeordnete stangenartige Halterung 14 und in Fig. 5 als unbemanntes Luftfahrzeug 15 ausgebildet ist.

Das unbemannte Luftfahrzeug 15 ist im Ausführungsbeispiel der Fig. 5 als senkrecht start- und landefähiger Quadrocopter ausgebildet. Die Start- und Landevorrichtung 16 des unbemannten Luftfahrzeugs 15 ist an geeigneter Stelle der Zugmaschine 3 oder der landwirtschaftlichen Arbeitsmaschine 4 angeordnet, im gewählten Ausführungsbeispiel auf dem Dach der Kabine der Zugmaschine 3, wie in Fig. 1 gezeigt. Von dieser Start- und Landevorrichtung 16 startet das unbemannte Luftfahrzeug 15 und ist mit austauschbaren und/oder auffüllbaren Energiespeichereinheiten sowie mit Vorrichtungen zur drahtlosen Kommunikation mit der Basisstation und/oder landwirtschaftlichen Zugmaschine 3 und/oder Arbeitsmaschine 4 ausgestattet.

Das unbemannte Luftfahrzeug 15 bewegt sich während des Verteilvorganges des zu verteilenden flüssigen und/oder verflüssigten Pflanzenschutz- und/oder Düngemittels über der landwirtschaftlichen Nutzfläche 1 im Luftraum im Wesentlichen über der landwirtschaftlichen Nutzfläche 1 in der Nähe der äußeren Bereiche des Verteilergestänges 7 der landwirtschaftlichen Arbeitsmaschine 4 und bevorzugt seitlich versetzt zu den äußeren Bereichen des Verteilergestänges 7.

Vorzugsweise wird zumindest ein Sensor 13 zumindest an den gegenüberliegenden Enden des Verteilergestänges 7 der landwirtschaftlichen Arbeitsmaschine 4 positioniert, damit die Erfassung der räumlichen Verteilung des Sprühfächers 9 und/oder zumindest der Abdrift 12 unabhängig von den tatsächlichen und/oder wechselnden Verhältnissen des Windes 11 zuverlässig erfolgt.

Die optimale Position des mittels Tragevorrichtung positionierten zumindest einen Sensors 13 wird auf Basis der aktuellen Richtung(en) und Geschwindigkeit(en) des Windes 11 ermittelt, welche mit zumindest einem Windsensor 17 erfasst werden, welcher an geeigneter Position der landwirtschaftlichen Arbeitsmaschine 4 angeordnet ist. Nach Ermittlung von Richtung(en) und Geschwindigkeit(en) des Windes 11 kann eine zu erwartende Deformation des Streufächers 9 und/oder beispielsweise die Richtung einer zu erwartenden Abdrift 12 abgeschätzt werden. Die entsprechende und geeignete Positionierung des zumindest einen Sensors 13 zur exakten Erfassung der Deformation des Streufächers 9 und/oder der Abdrift 12 erfolgt dann automatisiert durch Schwenken der stangenförmigen Tragevorrichtung 14 des Sensors 13 oder durch Positionsänderung des den Sensor 13 tragenden unbemannten Luftfahrzeugs 15.

Vorzugsweise liegt die eingestellte Position des zumindest einen Sensors 13 in der Nähe der zum Untergrund zumindest annähernd parallelen Ebene, in der auch das Verteilergestänge 7 liegt, gezeigt in Fig. 4, wobei auch ein geringes Vor- oder Nacheilen der Position des zumindest einen Sensors 13 bezüglich des Verteilergestänges 7 gemäß der vorangegangenen Ausführungen möglich ist. Die Position des zumindest einen Sensors 13 kann einen anderen Abstand zum Untergrund aufweisen, als die Ebene, in der das Verteilergestänge 7 liegt, wie es Fig. 5 zeigt.

Ist nur ein unbemanntes Luftfahrzeug 15 mit einem Sensor 13 verfügbar, so wird es vorzugsweise auf der Lee-Seite 18 der landwirtschaftlichen Arbeitsmaschine 4 eingesetzt, da dies von der Mitte der landwirtschaftlichen Arbeitsmaschine 4 aus gesehen zumindest annähernd der Bewegungsrichtung der Abdrift 12 entspricht. Außerhalb eines laufenden Verteilvorgangs wird der zumindest eine Sensor 13 von der beschriebenen Arbeitsposition in eine Transportposition verbracht, um vor Beschädigungen geschützt zu sein. Wird der Sensor 13 mittels stangenartiger Halterung 14 getragen, kann diese gemeinsam mit dem Verteilergestänge 7 in eine Transportposition verbracht werden. Ein unbemanntes Luftfahrzeug 15 kehrt beispielsweise zu seiner Start- und Landevorrichtung 16 zurück, um dort transportsicher verwahrt zu werden.

Während eines Verteilvorgangs benötigt die Tragevorrichtung des Sensors 13 geeignete Sensoren, um eine Annäherung an Hindernisse 19 feststellen zu können. Vorzugsweise kann die Tragevorrichtung mit dem Sensor 13 bei drohender Kollision mit Hindernissen 19 automatisiert in geeigneter Weise weggebracht und/oder bei kollisionsbedingter Überlast in geeigneter Weise reversibel wegbewegt werden. Im Anschluss wird sie selbsttätig oder mittels Aktuator in die Arbeitsposition wegbewegt. Bei Einsatz eines unbemannten Luftfahrzeugs als Tragevorrichtung wird bei Kollisionsgefahr die Flugroute in geeigneter Weise verändert.

Der zumindest eine Sensor 13 erfasst die räumliche Verteilung des Sprühfächers 9 vorzugsweise kontaktfrei, ist also beispielsweise ein optischer Sensor oder ein Radarsensor. Eine alternative Möglichkeit ist die hygroskopische Erfassung der Luftfeuchtigkeit in der Nähe der Außenbereiche des Verteilergestänges 7. Durch einen Vergleich mit einem an geeigneter Stelle mit einem geeigneten Feuchtigkeitssensor gemessenen Referenzwert kann die räumliche Verteilung des Sprühfächers 9 abgeleitet werden.

Ist die räumliche Ist-Verteilung des Sprühfächers 9 und/oder die Abdrift 12 mit dem erfindungsgemäß angeordneten Sensor 13 ermittelt, wird sie mit einer vorgegebenen Soll-Verteilung verglichen. Auf Basis festgestellter Differenzen zwischen Ist- und Soll-Verteilung greift eine der Arbeitsmaschine 4 zugeordnete Steuereinheit, in deren Speichereinheit Einstellwerte für die Betriebsparameter der Arbeitsmaschine 4 hinterlegt sind, regelnd in den Verteilvorgang ein. Beispielsweise werden durch die Steuereinheit auf Teilbreiten des Verteilergestänges 7 die Spritzdüsen 8 ab- oder zugeschaltet und/oder der Förderdruck des zu verteilenden flüssigen und/oder verflüssigten Pflanzenschutz- und/oder Düngemittels geeignet variiert, da die Tröpfchengröße von flüssigem Material, welches durch Spritzdüsen 8 gepresst wird von dem Förderdruck beeinflusst wird.

## Patentansprüche

1. System zur Erfassung der räumlichen Verteilung des Sprühfächers (9) eines flüssigen und/oder verflüssigten Pflanzenschutz- und/oder Düngemittels, welches mittels einer Trägerflüssigkeit verdünnt wird, mit
- einem Verteilergestänge (7) für eine landwirtschaftliche Arbeitsmaschine (4), an welchem wenigstens eine Spritzdüse (8) angebracht ist, mittels welcher das flüssige und/oder verflüssigte Pflanzenschutz- und/oder Düngemittel unter Tröpfchenbildung in Form eines Sprühfächers (9) druckbeaufschlagt auf den Boden und/oder auf die auf dem Boden wachsenden Pflanzen (10) ausbringbar ist,
- zumindest einem Sensor (13),
- zumindest einer Einrichtung (17) zur Erfassung von Richtung(en) und Stärke der Luftbewegung(en) (11),
**dadurch gekennzeichnet, dass** der zumindest eine Sensor (13) in Fahrtrichtung gesehen zumindest annähernd auf der Höhe des Verteilergestänges (7) beabstandet zu und neben der äußeren Spritzdüse (8) zu dieser mittels einer Tragevorrichtung versetzt positioniert ist, und
mithilfe der Tragevorrichtung entsprechend den und/oder angepasst an Richtung(en) und Stärke der Luftbewegung(en) (11) positionierbar ist.

2. System nach Anspruch 1, wobei der zumindest eine Sensor (13) seitlich nach außen versetzt positioniert ist.

3. System nach Anspruch 1, wobei der zumindest eine Sensor (13) seitlich nach innen versetzt positioniert ist.

4. System nach zumindest einem der vorausgegangenen Ansprüche, wobei an dem Verteilergestänge (7) in Abständen zueinander mehrere Spritzdüsen (8) angeordnet sind, und wobei der zumindest eine Sensor (13) zumindest um den zumindest halben Abstand zwischen den einzelnen Spritzdüsen (8) nach außen versetzt zur äußeren Spritzdüse (8) angeordnet ist.

5. System nach zumindest einem der vorausgegangenen Ansprüche, wobei der zumindest eine Sensor (13) dazu eingerichtet ist, zumindest die Abdrift (12) des Sprühfächers (9) zu erfassen.

6. System nach zumindest einem der vorgestehenden Ansprüche, wobei der wenigstens eine Sensor (13) geeignet ist, die räumliche Verteilung des zu erfassenden Sprühfächers (9) kontaktfrei, vorzugsweise mittels optischer Sensoren oder Radarsensoren zu erfassen.

7. System nach zumindest einem der vorstehenden Ansprüche, wobei die Erfassung der räumlichen Verteilung des Sprühfächers (9) durch den wenigstens einen Sensor (13) hygroskopisch durch Messen der Luftfeuchtigkeit und deren Vergleich mit einem an geeigneter Stelle gemessenen Referenzwert erfolgt.

8. System nach zumindest einem der vorangegangenen Ansprüche, wobei der wenigstes eine Sensor (13) mittels einer als gestängeartige Halterung (14) ausgebildeten Tragevorrichtung am äußeren Ende des Verteilergestänges (7) angeordnet ist.

9. System nach zumindest einem der vorangegangenen Ansprüche, wobei der wenigstens eine Sensor (13) eine Arbeits- und eine Transportposition aufweist und zwischen Arbeitsund Transportposition verbringbar ist.

10. System nach zumindest einem der vorangegangenen Ansprüche, wobei das Verteilergestänge (7) aus mehreren klappbaren Segmenten besteht, wobei Sensoren Annäherungen des Verteilergestänges (7), Segmenten des Verteilergestänges (7) und/oder der gestängeartigen Halterung (14) des wenigstens einen Sensors (13) an Hindernisse (19) feststellen, wobei bei Feststellung einer solchen Annäherung zumindest die den zumindest einen Sensor (13) tragende als gestängeartige Halterung (14) ausgebildete Tragvorrichtung über einen Aktuator automatisch weggebracht wird und/oder sie sich bei kollisionsbedingter Überlast reversibel wegbewegt und vorzugsweise selbststätig und/oder über einen Aktuator in die Arbeitsposition zurückbewegt wird.

11. System nach einem der vorausgegangenen Ansprüche, wobei jeweils ein Sensor (13) zur Erfassung der räumlichen Verteilung des Sprühfächers (9) zumindest an den gegenüberliegenden äußeren Enden des Verteilergestänges (7) angeordnet ist.

12. System nach zumindest einem der vorangegangenen Ansprüche, wobei die Tragevorrichtung des wenigstens einen Sensors (13) ein vorzugsweise im Wesentlichen senkrecht start- und landefähiges, vorzugsweise autonom agierendes, unbemanntes Luftfahrzeug (ULF) (15) ausgebildet ist, welches den wenigstens einen zur Erfassung des Sprühfächers (9) geeigneten Sensor (13) aufweist, welches eine Einheit zum Senden und/oder Empfangen von Steuersignalen von einer und/oder an eine Basisstation und/oder landwirtschaftliche Arbeitsmaschine (4) und zumindest eine Einheit zur Übermittlung der erfassten Daten an eine Basisstation und/oder an eine landwirtschaftliche Arbeitsmaschine (4) aufweist, eine wieder auffüllbare und/oder austauschbare Energiespeichereinheit aufweist und welches eine Einheit zur Positionsbestimmung aufweist.

13. System nach zumindest einem der vorangegangenen Ansprüche, wobei Sensoren vorgesehen sind, welche dazu eingerichtet sind, Umgebungsdaten, vorzugsweise Luftfeuchtigkeit sowie Richtung(en) und Stärke der Luftbewegung(en) (11) zu ermitteln.

14. Landwirtschaftliche Arbeitsmaschine (4), mit
- einem System zur Erfassung der räumlichen Verteilung eines Sprühfächers (9) eines flüssigen und/oder verflüssigten Pflanzenschutz- und/oder Düngemittels;
**dadurch gekennzeichnet, dass** das System nach einem der vorstehenden Ansprüche ausgebildet ist.

15. Landwirtschaftliche Arbeitsmaschine (4) nach Anspruch 14, wobei eine Steuereinheit vorgesehen ist, in deren Speichereinheit Einstellwerte für die Betriebsparameter der Arbeitsmaschine (4) hinterlegt sind, welche einer einstellbaren Soll-Verteilung zugeordnet sind, wobei die landwirtschaftliche Arbeitsmaschine (4) dazu eingerichtet ist, die mittels des zumindest einen Sensors (13) ermittelte räumliche Ist-Verteilung des Sprühfächers (9) mit der eingestellten Soll-Verteilung abzugleichen, wobei die Steuereinheit dazu eingerichtet ist, auf Basis festgestellter Differenzen zwischen Ist- und Soll-Verteilung durch Anpassung der Betriebsparameter der Arbeitsmaschine (4) regelnd in den Verteilvorgang einzugreifen und die Ist-Verteilung an die eingestellte Soll-Verteilung anzupassen.

16. Verfahren zur Anwendung des Systems gemäß einem der Ansprüche 1 bis 13 in einer landwirtschaftlichen Arbeitsmaschine (4) gemäß Anspruch 14 oder Anspruch 15,
**dadurch gekennzeichnet, dass** mithilfe des zumindest einen Sensors (13), welcher mittels einer Tragevorrichtung in Abhängigkeit von mittels geeigneter Erfassungseinrichtungen erfassten Messwerten für Richtung(en) und Stärke der Luftbewegung(en), sowie Fahrgeschwindigkeit der landwirtschaftlichen Arbeitsmaschine (4) im äußeren Bereich des Verteilergestänges (7) positioniert wird, die räumliche Verteilung des zu erfassenden Sprühfächers (9) und/oder die Abdrift (12) des Sprühfächers (9) erfasst wird, wobei durch eine Auswerteeinheit die durch den zumindest einen Sensor (13) ermittelte räumliche Ist-Verteilung und/oder die Abdrift (12) mit in einer Speichereinheit einstellbaren und/oder hinterlegten Sollund/oder Grenzwerten abgeglichen werden und auf Basis festgestellter Differenzen zwischen Ist- und Soll-Verteilung eine Steuereinheit durch Anpassung der Betriebsparameter der Arbeitsmaschine (4) regelnd in den Verteilvorgang eingreift.

## Claims

1. System for detecting the spatial distribution of the spray fan (9) of a liquid and/or liquefied plant protection product and/or fertilizer, which is diluted by means of a carrier liquid, with
- a spreader boom (7) for an agricultural working machine (4), on which spreader boom at least one spray nozzle (8) is mounted, by means of which the liquid and/or liquefied plant protection product and/or fertilizer can be discharged under pressure with the formation of droplets in the form of a spray fan (9) onto the ground and/or onto the plants (10) growing on the ground,
- at least one sensor (13),
- at least one device (17) for detecting the direction(s) and strength of the air movement(s) (11),
**characterized in that** when viewed in the direction of travel, the at least one sensor (13) is positioned at least approximately at the height of the spreader boom (7) at a distance from and next to the outer spray nozzle (8) and offset from the latter by means of a support device, and
can be positioned with the aid of the support device in correspondence with and/or in adaptation to the direction(s) and strength of the air movement(s) (11).

2. System according to Claim 1,
wherein the at least one sensor (13) is positioned offset laterally outward.

3. System according to Claim 1,
wherein the at least one sensor (13) is positioned offset laterally inward.

4. System according to at least one of the preceding claims, wherein a plurality of spray nozzles (8) is arranged on the spreader boom (7) at a distance from one another, and wherein the at least one sensor (13) is arranged offset outward from the outer spray nozzle (8) by at least half the distance between the individual spray nozzles (8).

5. System according to at least one of the preceding claims, wherein the at least one sensor (13) is configured to detect at least the drift (12) of the spray fan (9).

6. System according to at least one of the preceding claims, wherein the at least one sensor (13) is suitable for detecting without contact, preferably by means of optical sensors or radar sensors, the spatial distribution of the spray fan (9) to be detected.

7. System according to at least one of the preceding claims, wherein the spatial distribution of the spray fan (9) is detected hygroscopically by the at least one sensor (13) by measuring the humidity and comparing it with a reference value measured at a suitable location.

8. System according to at least one of the preceding claims, wherein the at least one sensor (13) is arranged at the outer end of the spreader boom (7) by means of a support device designed as a rod-like mounting (14).

9. System according to at least one of the preceding claims, wherein the at least one sensor (13) has a working position and a transport position and can be moved between the working position and the transport position.

10. System according to at least one of the preceding claims, wherein the spreader boom (7) consists of a plurality of foldable segments,
wherein sensors detect when the spreader boom (7), segments of the spreader boom (7) and/or of the rod-like mounting (14) of the at least one sensor (13) approach obstacles (19),
wherein, when such an approach is detected, at least the support device designed as a rod-like mounting (14) and supporting the at least one sensor (13) is automatically displaced via an actuator and/or it is reversibly displaced when the overload is due to collision and is preferably moved back into the working position automatically and/or via an actuator.

11. System according to any one of the preceding claims, wherein a sensor (13) for detecting the spatial distribution of the spray fan (9) is in each case arranged at least at the opposite outer ends of the spreader boom (7).

12. System according to at least one of the preceding claims, wherein the support device of the at least one sensor (13) is designed a preferably autonomously operating, unmanned aerial vehicle (UAV) (15), which is preferably substantially capable of vertical take-off and landing and which comprises the at least one sensor (13) suitable for detecting the spray fan (9); a unit for sending and/or receiving control signals from and/or to a base station and/or agricultural working machine (4); at least one unit for transmitting the detected data to a base station and/or to an agricultural working machine (4); a refillable and/or replaceable energy storage unit; and a unit for determining the position.

13. System according to at least one of the preceding claims, wherein sensors are provided which are configured to ascertain environmental data, preferably humidity, and direction(s) and strength of the air movement(s) (11).

14. Agricultural working machine (4), having
- a system for detecting the spatial distribution of a spray fan (9) of a liquid and/or liquefied plant protection product and/or fertilizer;
**characterized in that** the system is designed according to any one of the preceding claims.

15. Agricultural working machine (4) according to Claim 14, wherein a control unit is provided, in the storage unit of which are stored settings for the operating parameters of the working machine (4) which are associated with an adjustable target distribution, wherein the agricultural working machine (4) is configured to compare the actual spatial distribution of the spray fan (9) ascertained by means of the at least one sensor (13) with the set target distribution, wherein the control unit is configured to intervene in the distribution process in a regulating manner on the basis of determined differences between the actual and target distribution by adjusting the operating parameters of the working machine (4) and to adapt the actual distribution to the set target distribution.

16. Method for using the system according to any one of Claims 1 to 13 in an agricultural working machine (4) according to Claim 14 or Claim 15,
**characterized in that** by means of the at least one sensor (13), which is positioned in the outer region of the spreader boom (7) by means of a support device as a function of measured values for direction(s) and strength of the air movement(s), and the driving speed of the agricultural machine (4), detected by means of suitable detection devices, the spatial distribution of the spray fan (9) to be detected and/or the drift (12) of the spray fan (9) is detected, wherein, by means of an evaluation unit, the actual spatial distribution and/or drift (12) ascertained by the at least one sensor (13) is compared with target and/or limit values that are adjustable and/or stored in a storage unit, and, on the basis of determined differences between the actual and target distributions, a control unit intervenes in the distribution process in a regulating manner by adapting the operating parameters of the working machine (4).

## Revendications

1. Système de détection de la répartition spatiale du schéma de pulvérisation (9) d'un agent d'engrais et/ou de protection des plantes liquide et/ou fluidifié, qui est dilué au moyen d'un fluide porteur, comprenant
- une tringlerie d'épandage (7) pour une machine de travail agricole (4), sur laquelle au moins une buse de pulvérisation (8) est appliquée, au moyen de laquelle l'agent d'engrais et/ou de protection des plantes liquide et/ou fluidifié peut être appliqué par formation de gouttelettes sous la forme d'un schéma de pulvérisation (9) sous pression sur le sol et/ou sur les plantes (10) qui poussent sur le sol,
- au moins un capteur (13),
- au moins un appareil (17) pour la détection d'une ou plusieurs directions et de l'intensité du ou des mouvements de l'air (11),
**caractérisé en ce que** le au moins un capteur (13) est positionné, vu dans la direction d'avance, au moins approximativement à la même hauteur que la tringlerie d'épandage (7) espacé et à côté de la buse de pulvérisation (8) extérieure, décalé de celle-ci au moyen d'un dispositif de support et
peut être positionné, à l'aide du dispositif de support, de manière correspondante et/ou adaptée à la ou aux directions et à l'intensité du ou des mouvements de l'air (11).

2. Système selon la revendication 1,
dans lequel l'au moins un capteur (13) est positionné décalé latéralement vers l'extérieur.

3. Système selon la revendication 1,
dans lequel l'au moins un capteur (13) est positionné décalé latéralement vers l'intérieur.

4. Système selon au moins l'une des revendications précédentes, dans lequel, sur la tringlerie d'épandage (7), plusieurs buses de pulvérisation (8) sont agencées à des intervalles les unes des autres et dans lequel l'au moins un capteur (13) est agencé décalé vers l'extérieur par rapport à la buse de pulvérisation (8) extérieure au moins de la moitié minimum de la distance entre les buses de pulvérisation (8) individuelles.

5. Système selon au moins l'une des revendications précédentes, dans lequel l'au moins un capteur (13) est conçu pour détecter au moins la dérive (12) du schéma de pulvérisation (9).

6. Système selon au moins l'une des revendications précédentes, dans lequel l'au moins un capteur (13) est adapté pour détecter la répartition spatiale du schéma de pulvérisation (9) à détecter sans contact, de préférence au moyen de capteurs optiques ou de capteurs radar.

7. Système selon au moins l'une des revendications précédentes, dans lequel la détection de la répartition spatiale du schéma de pulvérisation (9) est effectuée par l'au moins un capteur (13) de manière hygroscopique par la mesure de l'humidité de l'air et sa comparaison à une valeur de référence mesurée à un endroit adapté.

8. Système selon au moins l'une des revendications précédentes, dans lequel l'au moins un capteur (13) est agencé sur l'extrémité extérieure de la tringlerie d'épandage (7) au moyen d'un dispositif de support formé comme une fixation de type tringle (14).

9. Système selon au moins l'une des revendications précédentes, dans lequel l'au moins un capteur (13) comporte une position de travail et une position de transport et peut être déplacé entre la position de travail et la position de transport.

10. Système selon au moins l'une des revendications précédentes, dans lequel la tringlerie d'épandage (7) est composée de plusieurs segments repliables,
dans lequel des capteurs déterminent des rapprochements de la tringlerie d'épandage (7), de segments de la tringlerie d'épandage (7) et/ou de la fixation de type tringle (14) de l'au moins un capteur (13) vers des obstacles (19),
dans lequel lors de la détermination d'un tel rapprochement, au moins le dispositif de support formé comme une fixation de type tringle (14) portant l'au moins un capteur (13) est éloigné automatiquement par le biais d'un actionneur et/ou se sépare de manière réversible en cas de surcharge due à une collision et est reculé de préférence de manière autonome et/ou par le biais d'un actionneur dans la position de travail.

11. Système selon l'une quelconque des revendications précédentes, dans lequel respectivement un capteur (13) est agencé pour la détection de la répartition spatiale du schéma de pulvérisation (9) au moins sur l'extrémité extérieure opposée de la tringlerie d'épandage (7).

12. Système selon au moins l'une des revendications précédentes, dans lequel le dispositif de support de l'au moins un capteur (13) est formé comme un véhicule aérien sans pilote (ULF) (15) agissant de préférence de manière autonome, de préférence à décollage et atterrissage essentiellement à la verticale, qui comporte l'au moins un capteur (13) adapté pour la détection du schéma de pulvérisation (9), qui comporte une unité pour l'envoi et/ou la réception de signaux de commande en provenance et/ou à destination d'une station de base et/ou d'une machine de travail agricole (4) et au moins une unité pour la transmission des données détectées à une station de base et/ou à une machine de travail agricole (4), comporte une unité d'accumulation d'énergie rechargeable et/ou échangeable et qui comporte une unité pour la détermination de position.

13. Système selon au moins l'une des revendications précédentes, dans lequel des capteurs sont prévus, qui sont conçus pour déterminer des données d'environnement, de préférence l'humidité de l'air, ainsi que la ou les directions et l'intensité du ou des mouvements de l'air (11).

14. Machine de travail agricole (4), comprenant
- un système pour la détection de la répartition spatiale d'un schéma de pulvérisation (9) d'un agent d'engrais et/ou de protection des plantes liquide et/ou fluidifié ;
**caractérisée en ce que** le système est formé selon l'une quelconque des revendications précédentes.

15. Machine de travail agricole (4) selon la revendication 14, dans laquelle une unité de commande est prévue, dans l'unité de mémoire de laquelle sont enregistrées des valeurs de réglage pour les paramètres de fonctionnement de la machine de travail (4), qui sont attribués à une répartition de consigne réglable, dans laquelle la machine de travail agricole (4) est conçue pour comparer la répartition spatiale réelle du schéma de pulvérisation (9) déterminée au moyen de l'au moins un capteur (13) avec la répartition de consigne réglée, dans lequel l'unité de commande est conçue pour, sur la base de différences déterminées entre les répartitions réelle et de consigne, intervenir par réglage dans le processus de répartition par adaptation des paramètres de fonctionnement de la machine de travail (4) et adapter la répartition réelle à la répartition de consigne réglée.

16. Procédé d'utilisation du système selon l'une quelconque des revendications 1 à 13 dans une machine de travail agricole (4) selon la revendication 14 ou la revendication 15,
**caractérisé en ce que,** à l'aide de l'au moins un capteur (13), qui est positionné au moyen d'un dispositif de support en fonction de valeurs de mesure déterminées au moyen de dispositifs de détection adaptés pour la ou les directions et l'intensité du ou des mouvements de l'air, ainsi que la vitesse de conduite de la machine de travail agricole (4) dans la zone extérieure de la tringlerie d'épandage (7), la répartition spatiale du schéma de pulvérisation (9) à détecter est détectée et/ou la dérive (12) du schéma de pulvérisation (9) est déterminée, dans lequel, par le biais d'une unité d'évaluation, la répartition spatiale réelle déterminée par l'au moins un capteur (13) et/ou la dérive (12) sont comparées avec des valeurs limites et/ou de consigne réglables enregistrées dans une unité de mémoire et, sur la base de différences déterminées entre les répartitions réelle et de consigne, une unité de commande intervient par réglage dans le processus de répartition par adaptation des paramètres de fonctionnement de la machine de travail (4).
